# FASCICULE DE BREVET EUROPEEN

(11) **EP 0 940 213 B1**
(45) Date de publication et mention de la délivrance du brevet: **07.06.2006**
(21) Numéro de dépôt: 99400167.5
(22) Date de dépôt: 25.01.1999
(51) Int. Cl.: B23K 15/00

(54) **Procédé de soudage par faisceau d'électrons sous vide local**
Verfahren zum Elektronenstrahlschweissen unter einem lokalen Vakuum
Method for electron beam welding under localized vacuum

(30) Priorité: 28.01.1998 FR 9800893
(43) Date de publication de la demande: 08.09.1999
(73) Titulaire: Safmatic, 79201 Parthenay Cedex (FR)
(72) Inventeur: Colmont, Alain, 95280 Jouy le Moutier (FR); Decemme, Michel, 79200 Pompaire (FR)
(74) Mandataire: Pittis, Olivier

(56) Documents cités:
- US-A- 3 497 665
- US-A- 4 677 273
- R. SPITTLE ET AL.: "Mobile EBW gun" METAL CONSTRUCTION AND BRITISCH WELDING JOURNAL, vol. 822, no. 5, 1973, pages 302-304, XP002079721
- PARPILLON J C ET AL: "UNE MACHINE DE SOUDAGE PAR FAISCEAU D'ELECTRONS D'UN VOLUME DE 800 M3" COLLOQUE INTERNATIONAL SUR LE SOUDAGE ET LA FUSION PAR FAISCEAUX D'ELECTRONS ET LASER / INTERNATIONAL CONFERENCE ON WELDING AND MELT BY ELECTRON AND LASER BEAMS, LA BOULE, JUNE 14 - 18, 1993, vol. TOME 2, no. COLLOQUE 5, 14 juin 1993 (1993-06-14), pages 657-663, XP000379823 COMMISSARIAT A L'ENERGIE ATOMIQUE

## Description

L'invention concerne un procédé de soudage, en une seule passe, de structures de grandes dimensions destinées au domaine nucléaire, sidérurgique, aérospatiale ou des chantiers navals, lequel procédé de soudage met en oeuvre une machine de soudage par faisceau d'électrons sous vide local pour réaliser des joints de soudure de longueur importante, par exemple des joints de soudure d'au moins 5 m, voire d'au moins 10 m.

Le soudage par faisceau d'électrons sous vide local est une technique de soudage connue pouvant être appliquée au raboutage de tôles planes ou légèrement cintrées, par exemple pour souder ensemble deux demi-viroles selon leur génératrices.

Ainsi, le document Commissariat à l'Energie Atomique n°32/79 et le document intitulé *"Machine de soudage par faisceau d'électrons à vide local", 2nd C.I.S.F.F.E., Avignon, 5-8 septembre 1978, p.501-508,* décrivent une machine de soudage linéaire par faisceau d'électrons sous vide local comprenant une enceinte de mise sous vide partiel de la zone de soudage et d'un canon à faisceau d'électrons mobile.

Cependant, ce type de machine de soudage de l'art antérieur présente plusieurs inconvénients.

En effet, le canon à électrons est généralement fixé à un chariot mobile ne pouvant se déplacer que selon une direction linéaire unique et à plat, c'est-à-dire en translation selon un axe horizontal (x-x') unique.

De là, on comprend que ce type de machine classique ne peut pas être facilement mis en oeuvre pour réaliser des soudures selon plusieurs axes différents, par exemple selon un axe horizontal et/ou selon un axe vertical, ni d'ailleurs pour souder selon d'autres inclinaisons, par exemple pour réaliser des joints de soudure sur une structure verticale et pour réaliser des soudures en position corniche sur des épaisseurs d'environ au moins 25 mm.

A ce titre, il faut souligner que, jusqu'à présent, le soudage à plat limitait la gamme d'épaisseurs pouvant être soudées à des valeurs d'au mieux 40 mm environ, étant donné qu'au delà le bain de métal en fusion s'élargit et le métal fusion s'écoule au fond de la cavité limitant ainsi la profondeur de la soudure devant être réalisée.

En outre, selon d'autres procédés et machines de soudage par faisceau d'électrons connus, un vide partiel n'est réalisé que d'un seul côté de la zone de soudage, c'est-à-dire du côté où est situé le canon à électrons, encore appelé côté "endroit" des pièces à souder.

Ainsi, le document *Metal Construction and British Welding Journal, "Mobile EBW gun", vol. 5, 1977*, *p. 302,* qui represente l'état de la technique le plus proche, enseigne un procédé de soudage par faisceau d'électrons, en une passe, dans lequel seul le côté où est situé le canon à électrons est mis sous-vide durant le soudage.

Or, il a été observé que réaliser un vide uniquement d'un seul côté de la zone de soudage n'est souvent pas suffisant pour garantir une action efficace du faisceau d'électrons et/ou ne permet pas d'obtenir des joints de soudure toujours uniforme et d'une qualité suffisante en raison de l'action, côté envers de la soudure, de la pression atmosphérique sur le bain de métal en fusion.

En outre, le côté envers de la soudure n'étant pas soumis à une mise sous vide, on assiste alors à une contamination du métal en fusion par des impuretés gazeux atmosphériques qui engendrent alors une baisse de la qualité, de l'aspect et des performances notamment de résistance du joint de soudure ainsi réalisé.

En outre, le procédé décrit par ce document ne permet pas de réaliser des soudures de plus de 3 m en longueur, est limité à une profondeur de pénétration de 70 mm et à une vitesse de soudage de 0.6 m.min⁻¹.

Pour tenter de résoudre ces problèmes, le document intitulé "5e *Colloque International sur le Soudage et la Fusion par Faisceaux d'Electrons et Laser*", *La Baule, France, 14-18 juin 1993*, *pages 657-663,* propose une installation de soudage par faisceau d'électrons composée d'une chambre à vide de 10.5 mètres de diamètre et de 11 mètres de long, dans laquelle est agencé un canon à électrons sur un portique 3 axes, le canon pouvant basculé de la position horizontale à la position verticale. Les pièces à souder sont positionnées les unes par rapport aux autres, pré-soudées en position adéquate par soudage TIG (Tungstène Inert Gas), puis enfin soudées par faisceau d'électrons à l'intérieur de la chambre de vide.

Il s'ensuit alors que cette installation de soudage ne permet pas de souder des structures ayant des dimensions supérieures à celles de la chambre de vide à l'intérieur de laquelle elles sont soudées ensemble car celles-ci dépasseraient de la chambre de vide, ce qui empêcherait la fermeture étanche de ladite chambre et la mise sous pression réduite de celle-ci.

De plus, selon ce procédé, l'ensemble de la chambre de vide doit être mis sous vide avant le début de l'opération de soudage par faisceau d'électrons, ce qui engendre, d'une part, une consommation énergétique importante du ou des pompes à vide utilisées pour réaliser le vide, compte-tenu du volume important de la chambre de vide, et, d'autre part, implique une perte de temps, donc de productivité, étant donné que l'intégralité de la chambre de vide doit être mise sous pression réduite, c'est-à-dire sous vide.

Par ailleurs, il existe d'autres documents, tels notamment les documents US-A-3,497,665, US-A-3,382,328 et US-A-4,677,273, décrivant des machines de soudage à faisceau d'électrons ne permettant de souder que des joints de longueur très réduite, par exemple de quelques centimètres. Pour ce faire, l'intégralité de la zone à souder, c'est-à-dire la totalité du joint à réaliser, est insérée dans une enceinte de dimensions réduites, quelques dizaine de centimètres, où un vide est opéré par une ou des pompes à vide, puis la totalité de la soudure est réalisée, en une seule passe, par un faisceau d'électrons.

Ainsi, le document US-A- 3, 497, 665 enseigne un procédé de soudage dans lequel le canon à électrons et l'enceinte sous vide sont maintenues fixes, alors que les pièces doivent être repositionnées pour réaliser les tronçons de soudure successifs.

On comprend immédiatement que ce type de machine n'est pas utilisable pour souder des soudures de grandes dimensions, c'est-à-dire de plusieurs mètres de longueur, pour des raisons analogues à celles exposées ci-dessus vis-à-vis du document "5e *Colloque International sur le Soudage et la Fusion par Faisceaux d'Electrons et Laser".*

Le but de la présente invention est donc de remédier aux problèmes et inconvénients des procédés et machines de soudage de l'art antérieur, en proposant un procédé de soudage amélioré pouvant être mis en oeuvre pour souder des structures de grandes dimensions destinées au domaine nucléaire, sidérurgique, aérospatiale ou des chantiers navals, par mise en oeuvre d'un faisceau d'électrons sous vide local pour réaliser des joints de soudure de longueur importante, par exemple des joints de soudure d'au moins 3 à 5 m, voire d'au moins 10 m.

La présente invention concerne alors un procédé de soudage par faisceau d'électrons sous vide au moins partiel pour assembler des pièces métalliques d'une structure de grande dimension en réalisant au moins un joint de soudure ayant une longueur totale (L) entre lesdites pièces, selon un plan de joint à souder, dans lequel on soude un nombre entier (n) de tronçons (T1 à Tn) de joint soudés successifs de longueurs (LT1 à LTn), respectivement, où n ≥ 2 et la somme des longueurs (LT1 à LTn) des (n) tronçons (T1 à Tn) de joint soudés est approximativement égale à la longueur totale (L) du joint de soudure à réaliser, chaque tronçon (T1 à Tn) de joint étant soudé, en une seule passe, par mise en oeuvre d'un faisceau d'électrons délivré par un canon à électrons et sous une pression inférieure à 10⁵ Pa du côté endroit et du côté envers du plan de joint à souder obtenu au moyen de moyens de mise sous vide au moins partiel, où, après avoir soudé un tronçon (T1 à Tn), on retire le canon à faisceau d'électron et les moyens de mise sous vide des pièces et on les place au niveau du prochain tronçon à souder.

Dans le cadre de l'invention, on appelle vide au moins partiel ou dépression, une pression inférieure à la pression atmosphérique, c'est-à-dire inférieure à 10⁵ Pa (1 bar).

Plus précisément, selon le procédé de l'invention :
- on positionne les pièces à souder ensemble, l'une par rapport à l'autre, de manière à définir un plan de joint à souder, et
- on soude un nombre entier (n) de tronçons (T1 à Tn) de joint soudés successifs de longueurs (LT1 à LTn), respectivement, au moyen d'au moins un canon à faisceau d'électrons et de moyens de mise sous vide au moins partiel comportant au moins une enceinte de mise sous vide, où n ≥ 2 et la somme des longueurs (LT1 à LTn) des (n) tronçons (T1 à Tn) de joint soudés est approximativement égale à la longueur totale (L) du joint de soudure à réaliser, chaque tronçon (T1 à Tn) de joint étant réalisé selon au moins les étapes successives suivantes :
   (a) on positionne au moins le canon à faisceau d'électrons et les moyens de mise sous vide comportant au moins l'enceinte de mise sous vide par rapport à une portion du plan de joint à souder comprenant le tronçon (T1 à Tn) à souder,
   (b) on crée un vide au moins partiel dans une première zone de mise en dépression et dans une seconde zone de mise en dépression par diminution de la pression régnant dans lesdites première et seconde zones jusqu'à un niveau de pression inférieur à 10⁵ Pa, ladite première zone étant située du côté endroit dudit plan de joint à souder et comprenant au moins ledit tronçon (T1 à Tn) à souder, et ladite seconde zone étant située du côté envers dudit plan de joint à souder et comprenant au moins ledit tronçon (T1 à Tn) à souder,
   (c) on soude ensemble, en une seule passe, lesdites pièces métalliques en soumettant au moins ledit tronçon (T1 à Tn) à souder à un faisceau d'électrons délivré par ledit canon à électrons pour obtenir un tronçon soudé.

Selon le cas, le procédé de soudage selon la présente invention peut comprendre l'une ou plusieurs des caractéristiques suivantes :
- au moins deux tronçons (T1 à Tn) de joint successifs ont des longueurs (LT1 à LTn) approximativement égales.
- les tronçons (T1 à Tn) de joint successifs ont des longueurs (LT1 à LTn) différentes.
- subséquemment à l'étape (c), on procède comme suit (étapes supplémentaires (d) et (e) ) :
   (d) augmente la pression dans les première et seconde zones jusqu'à atteindre dans lesdites première et seconde zones un niveau de pression de l'ordre de 10⁵ Pa, et
   (e) on repositionne au moins les moyens de mise sous vide et éventuellement le canon à faisceau d'électrons par rapport au tronçon soudé à l'étape (c) pour permettre de souder le tronçon de joint suivant, en répétant au moins les étapes (b) et (c) sur un tronçon de joint à souder situé en aval le tronçon soudé à l'étape (c).
- on arrête de souder lorsque la somme des longueurs (LT1 à LTn) des tronçons soudés (T1 à Tn) est égale à la longueur totale (L) du joint de soudure souhaité.
- le joint de soudure à une longueur totale d'au moins 2 m, de préférence d'au moins 5 m, préférentiellement encore d'au moins 10 m, et/ou en ce que chaque tronçon soudé (T1 à Tn) a une longueur (LT1 à LTn) comprise entre 0.01 m et 5 m, de préférence comprise entre 0.10 m et 4 m, préférentiellement encore entre 1 m et 3 m.
- les pièces à souder ont une épaisseur de 1 mm à 300 mm environ, de préférence d'au moins 25 mm, préférentiellement encore d'au moins 75 mm et/ou en ce que les pièces à souder sont réalisées en aciers, en aciers inoxydables, en alliages légers ou en autres métaux.
- les pièces à souder font partie d'une structure, en particulier de grandes dimensions, susceptible d'être mise en oeuvre dans le domaine nucléaire, automobile, aérospatial ou naval.
- l'étape (b), le seuil dépressionnaire dans lesdites première et seconde zones de mise en dépression est inférieur à 100 Pa, préférentiellement encore inférieur à 10 Pa, de préférence encore de 2 à 5 Pa.
- préférentiellement, on maintient, durant le soudage, une pression comprise entre 10 Pa (10⁻¹ mbar) et 1 Pa (10⁻² mbar).
- on génère le faisceau d'électrons au moyen d'une machine de soudage par faisceau d'électrons comprenant :
   . les moyens de mise sous vide au moins partiel comportant au moins une enceinte de mise sous vide au moins partiel permettant de créer un vide au moins partiel localement des côtés endroit et envers du tronçon à souder, et
   . des moyens de soudage comprenant un canon à électrons permettant de générer au moins le faisceau d'électrons, au moins le canon à électrons étant porté par des moyens supports mobiles permettant un déplacement d'au moins ledit canon à faisceau d'électrons selon au moins deux axes différents (x-x') et (y-y'), de manière à réaliser un nombre entier (n) de tronçons (T1 à Tn) de joint soudés successifs de longueurs (LT1 à LTn).

Selon l'invention, on crée localement, au niveau de la zone à souder, un vide partiel des deux côtés des pièces à souder, c'est-à-dire côté endroit et côté envers du joint de soudure à réaliser. Dans le cadre de l'invention, les pièces à souder ensemble sont :
- soit des éléments ou pièces indépendantes l'une de l'autre devant être réunies par soudage en une structure soudée, c'est-à-dire rendues solidaires par soudage,
- soit des parties d'une même pièce ou structure devant être unies par soudage, par exemple les deux bords longitudinaux d'un élément cylindrique devant être soudés l'un avec l'autre pour former un élément tubulaire ou une structure creuse.

Le procédé selon l'invention est particulièrement adapté à la réalisation de joints de soudure d'une longueur totale LT au moins 5 m par réalisation, en une seule passe, de plusieurs tronçons de soudure successifs ayant chacun une longueur de 1 à 3 m environ, lesdits tronçons pouvant avoir des longueurs égales ou différentes les uns des autres.

Par exemples, pour réaliser un joint de soudure d'une longueur totale de 10 mètres, on peut :
- soit souder 4 tronçons successifs de 2,5 m chacun ou 5 tronçons de 2 m chacun, par exemples,
- soit souder 3 tronçons de 3 m chacun et 1 tronçon de 1 m, par exemple.

Par ailleurs, le procédé selon l'invention n'est, d'une part, pas limité à un soudage linéaire et à plat mais peut être aussi utilisé pour souder selon des axes différents (x-x') et (y-y') et/ou selon plusieurs directions, à savoir verticale, horizontale et/ou oblique, en fonction de l'orientation de l'axe du canon à électrons, et n'est, d'autre part, pas limité ni quant à la longueur totale des joints de soudure à réaliser, ni quant aux dimensions, aux formes et/ou au poids des pièces à assembler, ni quant à la géométrie des soudures à réalisées, c'est-à-dire que celles-ci peuvent être linéaires, curvilignes ou autres. Une machine de soudage par faisceau d'électrons pour assembler des pièces métalliques en réalisant au moins un joint de soudure ayant une longueur totale (L) entre lesdites pièces, susceptible de mettre en oeuvre le procédé de soudage selon l'invention, comprend:
- des moyens de mise sous vide au moins partiel comportant au moins des moyens d'étanchéité et une enceinte de mise sous vide au moins partiel permettant de créer un vide au moins partiel localement des côtés endroit et envers des tronçons de joint à souder,
- des moyens de soudage comprenant un canon à électrons permettant de générer au moins un faisceau d'électrons, et
- des moyens supports mobiles portant au moins le canon à électrons et permettant un déplacement d'au moins ledit canon à faisceau d'électrons selon au moins deux axes différents (x-x') et (y-y'), de manière à pouvoir réaliser des tronçons (T1 à Tn) de joint soudés successifs de longueurs (LT1 à LTn), selon une ou plusieurs directions de soudage.

Selon le cas, la machine de soudage peut comprendre l'une ou plusieurs des caractéristiques suivantes :
- elle comporte, en outre, des moyens de commande pour contrôler au moins un paramètre choisi parmi le déplacement du canon à électrons, le fonctionnement du canon à électrons, la réalisation du vide partiel, le pilotage du programme de soudage, le cycle complet de soudage et le contrôle des sécurités.
- on déplace le canon à faisceau d'électrons selon le premier axe (x-x') et/ou selon le second axe (y-y') par pilotage par commande numérique et/ou par micro-ordinateur.
- l'enceinte de mise sous vide partiel entoure au moins une partie du canon à faisceau d'électrons,
- l'enceinte de mise sous vide partiel et le canon à faisceau d'électrons sont portés par un châssis-porteur.
- le châssis-porteur comporte des moyens de guidage permettant de guider le déplacement du canon à faisceau d'électrons, le déplacement du canon à faisceau d'électrons dans lesdits moyens de guidage étant assuré par au moins un moteur électrique, hydraulique ou autre.
- les moyens d'étanchéité comprennent une contre-bride et/ou une embase, de préférence ladite contre-bride et/ou l'enceinte contribuent à assurer la mise sous vide au moins partiel dans une seconde zone située du côté envers du plan de joint à souder et dans une première zone située du côté endroit du plan de joint à souder.
- l'enceinte de mise sous vide partiel entoure au moins une partie du canon à faisceau d'électrons.
- ladite enceinte de mise sous vide est reliée à au moins une pompe à vide par l'intermédiaire d'au moins une canalisation de gaz, de manière à créer un vide au moins partiel à l'intérieur de l'enceinte en évacuant tout ou partie de l'air ambiant qui s'y trouve.
- le châssis-porteur comporte, en outre, des moyens d'accrochage permettant une fixation dudit châssis-porteur directement sur la ou les pièces à souder, par exemples un système avec un ou des crochets de fixation ou un système à ventouses.
- elle comprend au moins une première partie, mobile ou fixe et préférentiellement posée sur le sol, et une deuxième partie, mobile et préférentiellement accrochable à la ou aux pièces à souder, reliées l'une à l'autre par des moyens de liaison, ladite deuxième partie comprenant ledit châssis-porteur, le canon et la enceinte de mise sous vide.
- ladite première partie comprend des moyens de commandes de la machine, tel un pupitre de commande numérique.
- elle comprend, en outre, des moyens de visualisation, comprenant par exemple une caméra vidéo ou analogue, permettant de visualiser, c'est-à-dire observer ou localiser avant, pendant et/ou après soudage, au moins une partie de la scène de soudage, de manière à effectuer une visée et/ou un positionnement correct et ainsi de contrôler efficacement la réalisation du joint de soudure, de préférence les moyens de visualisation sont reliés à un pupitre de commande.
- on prévoit des moyens d'éclairage, telle qu'une lampe ou analogue, permettant d'améliorer la luminosité de la zone à souder et permettre un meilleur contrôle visuel du soudage par le biais des moyens de visualisation.

L'invention va maintenant être décrite plus en détail à l'aide d'un mode de réalisation d'une machine de soudage susceptible d'être utilisée pour une mise en oeuvre d'un procédé de soudage selon la présente invention, ladite machine étant schématisée sur les figures annexées, données à titre illustratif mais non limitatif.

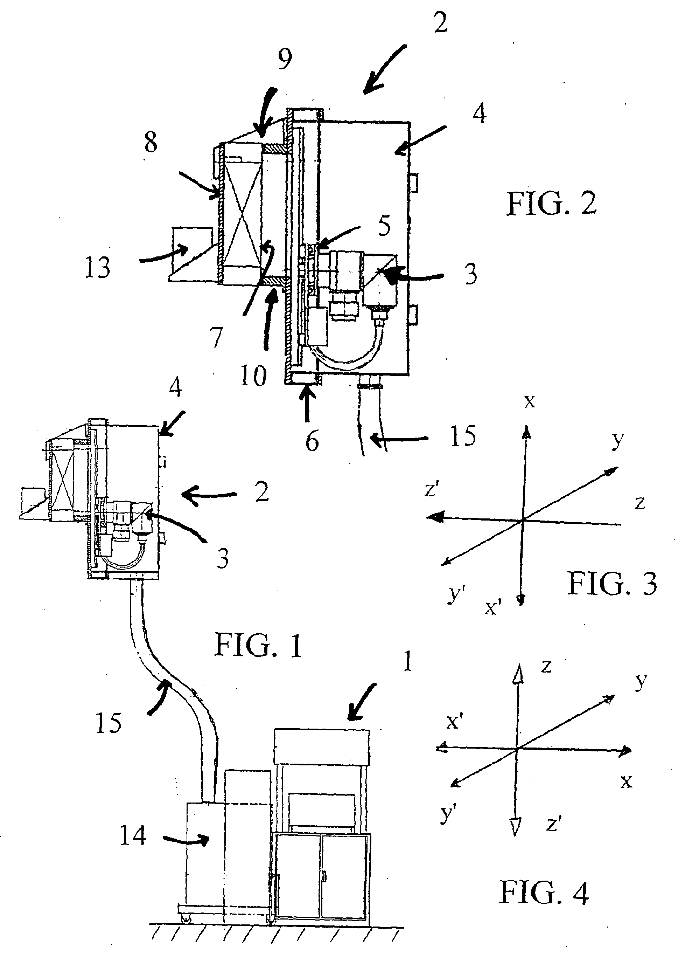

La Figure 1 schématise une machine de soudage par faisceau d'électrons sous vide local pour une mise en oeuvre d'un procédé de soudage selon la présente invention, laquelle est constituée de deux parties, à savoir une première partie 1 posée sur le sol et une deuxième partie 2 mobile comportant notamment un canon à faisceau d'électrons 3 et une enceinte 4 de mise sous vide partiel, c'est-à-dire en dépression.

Ainsi que détaillé sur la Figure 2, la deuxième partie 2 mobile, comprenant un châssis-porteur 6, peut être directement accrochée sur les pièces 7 à souder, l'accrochage étant assuré par un système d'accrochage ou des moyens de fixation 9 de type classique, tels des crochets d'arrimage ou un système à ventouses, relié au châssis-porteur 6.

De plus, la deuxième partie 2 peut être déplacée à volonté sur la ou les pièces 7 à souder, de manière à pouvoir être positionnée correctement sur la ou les zones à souder.

Plus précisément, l'enceinte 4 de mise sous-vide est amovible et englobe le canon 3 à faisceau d'électrons, par exemple un générateur permettant d'obtenir un faisceau d'électrons de 45 kW de puissance, par exemple, le canon 3 étant, en outre, porté par un chariot-support 5.

La mise sous-vide ou en dépression de l'intérieur de l'enceinte 4 est réalisé par le groupe de pompage 14 qui extrait au moins une partie de l'air ambiant contenu dans ladite enceinte 4, par l'intermédiaire d'une canalisation 15, de manière à créer un vide partiel dans l'enceinte 4.

Les moyens d'étanchéité, tels les joints toriques, susceptibles d'être utilisés afin d'assurer une mise en dépression locale et efficace de l'enceinte 4 et donc de la zone de soudage sont de type classique et ne seront donc pas davantage détaillés ici.

On peut néanmoins préciser que l'étanchéité entre le châssis 6 et les pièces à souder 7 est assuré notamment par une embase 10, de préférence interchangeable, fixée sur ledit châssis 6 et de joints toriques.

Etant donné que la longueur du joint de soudure à réaliser peut varier considérablement d'une application à l'autre, en fonction des dimensions des pièces 7 à souder, la machine autorise l'utilisation d'embases 10 de dimensions différentes.

Le vide partiel, c'est-à-dire la dépression, obtenue dans l'enceinte ou enceinte 4 peut être contrôlé par une jauge, de préférence une jauge à seuil minimal réglable à volonté, de manière à délivrer une information de pression et/ou à empêcher, notamment par le biais de vannes ou autres moyens similaires, le début de l'opération de soudage si ledit seuil minimal de mise en dépression n'est pas atteint ou, au contraire, d'autoriser la formation du faisceau d'électron lorsqu'un vide partiel acceptable a été obtenu, par exemple un seuil minimal dépressionnaire fixé à 2 Pa (2.10⁻² mbar).

La machine de soudage permet de réaliser un vide partiel et localement, non seulement du côté "endroit" des pièces 7 à souder, c'est-à-dire du côté où est situé le canon 3, mais aussi du côté "envers" des pièces 7 à souder, c'est-à-dire du côté opposé au canon 3.

En particulier, la mise en dépression du côté "envers" de la zone de soudage peut être effectuée par le biais d'une contre-bride 8 munie d'un ou plusieurs joints d'étanchéité et d'une pompe secondaire 13.

Comme précédemment, la contre-bride 8 est, elle aussi, adaptable à la longueur du joint de soudure à réaliser et donc interchangeable.

Lorsque la deuxième partie 2 de la machine de soudage est accrochée et positionnée sur la ou les pièces à souder, le bridage en position est effectué, par exemple, par pincement de l'embase 10 et de la contre-bride 8 par l'intermédiaire de tirants vissés ou autres moyens de maintien analogues.

Avantageusement, l'enceinte 4 ou cloche est fixée au châssis-porteur 6 sur lequel se déplace le chariot-support 5 portant lui-même le canon 3 à faisceau d'électrons, le déplacement du chariot-support 5 se faisant par l'intermédiaire de rails de guidage ou autres moyens analogues.

Par exemple, deux glissières linéaires à billes, agencées orthogonalement l'une par rapport à l'autre, permettent le mouvement en translation du canon 3 porté par le chariot-support 5 selon des axes différents (x-x') et (y-y'), de préférence un axe sensiblement horizontal (x-x') et un axe sensiblement vertical (y-y'); l'entraînement en translation dudit chariot-support 5 étant assuré par un système électrique motorisé commandé à distance par le pupitre de commande de la première partie 1.

Ainsi, dans le cas présent, le chariot-support 5 et donc le canon 3 peuvent se déplacer de 1000 mm selon un axe (x-x') horizontal et de 100 mm selon un axe (y-y') vertical.

Toutefois, il est possible de prévoir, dès le départ, des distances de déplacement supérieures ou inférieures à ces valeurs ou de modifier à volonté ces distances et ce, notamment , en fonction des pièces à souder, c'est-à-dire de la longueur des tronçons de joints de soudure à effectuer.

La machine de soudage permet de souder non seulement selon 2 axes (x-x') et (y-y') différents, préférentiellement perpendiculaires l'un à l'autre, mais aussi selon plusieurs positions, en particulier, en position à plat et en position corniche, ce qui permet de réaliser des soudures de fortes pénétration, c'est-à-dire pouvant atteindre 300 mm.

En d'autres termes, la machine de soudage autorise, d'une part, un déplacement du canon à électrons selon au moins deux axes distincts (x-x') et (y-y'), notamment deux axes perpendiculaire l'un à l'autre, afin de pouvoir effectuer une soudure en une seule passe et, d'autre part, un positionnement de l'axe du canon à électrons non seulement selon un axe vertical (position à plat) ou, selon le cas, selon un axe sensiblement horizontal (position corniche), mais aussi selon tout axe intermédiaire entre ces deux positions, c'est-à-dire obliquement.

La vitesse de déplacement du canon 3 en fonctionnement est variable et peut être adaptée selon les besoins, notamment, en fonction de l'épaisseur des pièces à souder.

Des essais réalisés avec une machine ont permis d'atteindre des vitesses allant jusqu'à environ 10 m.min⁻¹ avec une rectitude du déplacement quasi parfaite (+/- 0.03 mm).

Il va de soi que les dimensions et l'architecture de la cloche 4 sont choisies de manière adéquate pour, d'une part, ne pas entraver le déplacement du canon 3 à l'intérieur de ladite enceinte 4 et, d'autre part, pour permettre une conservation d'un vide partiel sur la zone de soudage avant et/ou pendant et/ou après déplacement dudit canon 3 sur son chariot-porteur 5.

Le canon 3 à faisceau d'électrons comporte plusieurs électrodes, à savoir, par exemple, une cathode massive en hexaborure de lanthane permettant une grande stabilité associée à une longue durée de vie, par exemple de 200 à 400 heures, voire dans certains cas jusqu'à 1000 heures, un filament de chauffage indirect régulé et une grille classiquement appelée Wehnelt, permettant un fonctionnement en régime triode ou diode.

De plus, le canon 3 comprend également deux bobines de focalisation à faibles aberrations permettant de souder un joint situé à une distance de 100 mm à 1000 mm du centre de cette bobine, une vanne permettant d'isoler le canon de l'enceinte de soudage, un bol anodique fixé sur le corps de vanne, une enceinte canon constituée de deux parties, l'une étant fixée sur le corps de vanne et recevant l'orifice de pompage et des moyens de mesure de pression, et l'autre étant solidaire de la première et équipée d'une traversée électrique étanche terminée, côté canon, par un système d'embrochage concentriques à connection rapide.

Le faisceau est généré par générateur, par exemples un générateur 10kW/55kV, 30kW/45kV, 45kW/45kV, 45kW165kV, 100kW/100kV....

La géométrie du canon 3 et la définition des électrodes sont choisies de manière à obtenir une tenue en tension adéquate.

En outre, il est possible d'agencer sur la deuxième partie 2 d'autres accessoires ou dispositifs susceptibles de présenter un intérêt, tels une caméra de visée, des moyens de refroidissement, des vérins, des vannes....

La première partie 1 comporte, quant à elle, des moyens informatisés de commandes, de programmation et/ou de régulation, tel un pupitre de commande, un variateur, des moyens d'asservissement, des cartes électroniques, un micro-ordinateur, des microprocesseurs......

Plus précisément, le pupitre de commande est monté sur roulettes pour pouvoir être déplacé facilement et regroupe les moyens de commande du générateur du faisceau d'électrons, du système de déviation dudit faisceau, de la machine elle-même et une commande numérique.

La figure 3 schématise les directions (x-x') et (y-y') de déplacement du canon 3 à faisceau d'électrons et l'orientation (z-z') de l'axe dudit canon 3 lors d'un soudage en position corniche, c'est-à-dire pour un positionnement de la deuxième partie 2 de la machine de soudage et donc du canon 3 comme représenté sur les figures 1 et 2.

La figure 4 schématise, quant à elle, les directions (x-x') et (y-y') de déplacement du canon 3 à faisceau d'électrons et l'orientation (z-z') de l'axe dudit canon 3 lors d'un soudage en position à plat.

On remarque, sur ces deux figures 3 et 4, que les axes (x-x'), (y-y') et (z-z') sont perpendiculaires les uns aux autres et que le faisceau d'électrons est dirigé de z vers z'.

La machine autorise une grande souplesse d'utilisation, peut s'adapter aux structures des pièces à souder et permet de souder des épaisseurs importantes.

La présente invention peut être appliquée à la fabrication de structures comprenant des pièces soudées utilisables subséquemment dans des domaines très variés, notamment dans les domaines aéronautique, de l'armement, automobile, nucléaire, de la chaudronnerie,......

En particulier, le procédé de soudage de l'invention est particulièrement bien adapté à la réalisation de structures lourdes, notamment de plusieurs dizaine de tonnes, et de grandes dimensions de formes tubulaires ou sphériques.

## Revendications

1. Procédé de soudage par faisceau d'électrons sous vide au moins partiel pour assembler des pièces métalliques d'une structure de grande dimension en réalisant au moins un joint de soudure ayant une longueur totale (L) entre lesdites pièces, selon un plan de joint à souder, dans lequel on soude un nombre entier (n) de tronçons (T1 à Tn) de joint soudés successifs de longueurs (LT1 à LTn), respectivement, où n ≥ 2 et la somme des longueurs (LT1 à LTn) des (n) tronçons (T1 à Tn) de joint soudés est approximativement égale à la longueur totale (L) du joint de soudure à réaliser, chaque tronçon (T1 à Tn) de joint étant soudé, en une seule passe, par mise en oeuvre d'un faisceau d'électrons délivré par un canon à électrons et sous une pression inférieure à 10⁵ Pa du côté endroit et du côté envers du plan de joint à souder obtenu au moyen de moyens de mise sous vide au moins partiel, où, après avoir soudé un tronçon (T1 à Tn), on retire le canon à faisceau d'électron et les moyens de mise sous vide des pièces et on les place au niveau du prochain tronçon à souder.

2. Procédé selon la revendication 1, dans lequel
- on positionne les pièces à souder ensemble, l'une par rapport à l'autre, de manière à définir un plan de joint à souder, et
- on soude un nombre entier (n) de tronçons (T1 à Tn) de joint soudés successifs de longueurs (LT1 à LTn), respectivement, au moyen d'au moins un canon à faisceau d'électrons et de moyens de mise sous vide au moins partiel comportant au moins une enceinte de mise sous vide, où n ≥ 2 et la somme des longueurs (LT1 à LTn) des (n) tronçons (T1 à Tn) de joint soudés est approximativement égale à la longueur totale (L) du joint de soudure à réaliser, chaque tronçon (T1 à Tn) de joint étant réalisé selon au moins les étapes successives suivantes :
(a) on positionne au moins le canon à faisceau d'électrons et les moyens de mise sous vide comportant au moins l'enceinte de mise sous vide par rapport à une portion du plan de joint à souder comprenant le tronçon (T1 à Tn) à souder,
(b) on crée un vide au moins partiel dans une première zone de mise en dépression et dans une seconde zone de mise en dépression par diminution de la pression régnant dans lesdites première et seconde zones jusqu'à un niveau de pression inférieur à 10⁵ Pa, ladite première zone étant située du côté endroit dudit plan de joint à souder et comprenant au moins ledit tronçon (T1 à Tn) à souder, et ladite seconde zone étant située du côté envers dudit plan de joint à souder et comprenant au moins ledit tronçon (T1 à Tn) à souder,
(c) on soude ensemble, en une seule passe, lesdites pièces métalliques en soumettant au moins ledit tronçon (T1 à Tn) à souder à un faisceau d'électrons délivré par ledit canon à électrons pour obtenir un tronçon soudé.

3. Procédé selon la revendication 2, **caractérisé en ce qu'**au moins deux tronçons (T1 à Tn) de joint successifs ont des longueurs (LT1 à LTn) approximativement égales.

4. Procédé selon la revendication 2, **caractérisé en ce que** les tronçons (T1 à Tn) de joint successifs ont des longueurs (LT1 à LTn) différentes.

5. Procédé selon l'une des revendications 2 à 4, **caractérisé en ce que**, subséquemment à l'étape (c), on procède comme suit :
(d) augmente la pression dans les première et seconde zones jusqu'à atteindre dans lesdites première et seconde zones un niveau de pression de l'ordre de 10⁵ Pa, et
(e) on repositionne au moins les moyens de mise sous vide et éventuellement le canon à faisceau d'électrons par rapport au tronçon soudé à l'étape (c) pour permettre de souder le tronçon de joint suivant, en répétant au moins les étapes (b) et (c) sur un tronçon de joint à souder situé en aval le tronçon soudé à l'étape (c).

6. Procédé selon l'une des revendications 2 à 5, **caractérisé en ce qu'**on arrête de souder lorsque la somme des longueurs (LT1 à LTn) des tronçons soudés (T1 à Tn) est égale à la longueur totale (L) du joint de soudure souhaité.

7. Procédé selon l'une des revendications 2 à 6, **caractérisé en ce que** le joint de soudure à une longueur totale d'au moins 2 m, de préférence d'au moins 5 m, préférentiellement encore d'au moins 10 m, et/ou **en ce que** chaque tronçon soudé (T1 à Tn) a une longueur (LT1 à LTn) comprise entre 0.01 m et 5 m, de préférence comprise entre 0.10 m et 4 m, préférentiellement encore entre 1 m et 3 m.

8. Procédé selon l'une des revendications 2 à 5, **caractérisé en ce que** les pièces à souder ont une épaisseur de 1 mm à 300 mm environ, de préférence d'au moins 25 mm, préférentiellement encore d'au moins 75 mm et/ou **en ce que** les pièces à souder sont réalisées en aciers, en aciers inoxydables, en alliages légers ou en autres métaux.

9. Procédé selon l'une des revendications 2 à 6, **caractérisé en ce que** les pièces font partie d'une structure susceptible d'être mise en oeuvre dans le domaine nucléaire, automobile, aérospatial ou naval.

10. Procédé selon l'une des revendications 2 à 9, **caractérisé en ce que** le seuil dépressionnaire dans lesdites première et seconde zones de mise en dépression est inférieur à 100 Pa, préférentiellement inférieur à 10 Pa, de préférence encore compris entre 2 et 10 Pa.

11. Procédé selon l'une des revendications 2 à 8, **caractérisé en ce qu'**on génère le faisceau d'électrons au moyen d'une machine (1, 2) de soudage par faisceau d'électrons comprenant :
- les moyens de mise sous vide (4, 8, 10, 13, 14, 15) au moins partiel comportant au moins une enceinte (4) de mise sous vide au moins partiel permettant de créer un vide au moins partiel localement des côtés endroit et envers du tronçon à souder, et
- des moyens de soudage (3) comprenant un canon à électrons permettant de générer au moins le faisceau d'électrons, au moins le canon (3) à électrons étant porté par des moyens supports (5) mobiles permettant un déplacement d'au moins ledit canon (3) à faisceau d'électrons selon au moins deux axes différents (x-x') et (y-y'), de manière à réaliser un nombre entier (n) de tronçons (T1 à Tn) de joint soudés successifs de longueurs (LT1 à LTn).

## Claims

1. Electron beam welding method for joining, in at least a partial vacuum, metal workpieces of a large structure, producing at least one welded joint having a total length (L) between said workpieces, in a weld plane, in which a whole number (n) of successive welded joint sections (T₁ to Tₙ) of lengths (LT₁ to LTₙ), respectively, where n≥ 2, and the sum of the lengths (LT₁ to LTₙ) of the (n) welded joint sections (T₁ to Tₙ) is approximately equal to the total length (L) of the welded joint to be produced, each welded joint section (T₁ to Tₙ) being welded, in a single pass, by using an electron beam delivered by an electron gun and with a pressure below 10⁵ Pa on the front side and on the back side of the weld plane obtained by means of at least partial vacuum means, in which, after a section (T₁ to Tₙ) has been welded, the electron beam gun and the means for placing the workpieces in a vacuum are removed and placed at the next section to be welded.

2. Method according to Claim 1, in which:
- the workpieces to be welded together are positioned, one with respect to the other, so as to define a weld plane; and
- a whole number (n) of sections (T₁ to Tₙ) of successive welded joints of lengths (LT₁ to LTₙ), respectively, are welded by means of at least one electron beam gun and means for creating at least a partial vacuum, comprising at least a vacuum chamber, in which n ≥ 2 and the sum of the lengths (LT₁ to LTₙ) of the (n) welded joint sections (T₁ to Tₙ) is approximately equal to the total length (L) of the welded joint to be produced, each joint section (T₁ to Tₙ) being produced in at least the following successive steps:
(a) at least the electron beam gun and the vacuum means comprising at least the vacuum chamber are positioned relative to one portion of the weld plane that includes the section (T₁ to Tₙ) to be welded,
(b) at least a partial vacuum is created in a first reduced-pressure region and in a second reduced-pressure region by reducing the pressure in said first and second regions down to a pressure level of below 10⁵ Pa, said first region being located on the front side of said weld plane and comprising at least said section (T₁ to Tₙ) to be welded, and said second region being located on the back side of said weld plane and comprising at least said section (T₁ to Tₙ) to be welded and
(c) said metal workpieces are welded together, in a single pass, by subjecting at least said section (T₁ to Tₙ) to be welded to an electron beam delivered by said electron gun in order to obtain a welded section.

3. Method according to Claim 2, **characterized in that** at least two successive joint sections (T₁ to Tₙ) have lengths (LT₁ to LTₙ) that are approximately equal.

4. Method according to Claim 2, **characterized in that** the successive joint lengths (T₁ to Tₙ) have different lengths (LT₁ to LTₙ).

5. Method according to one of Claims 2 to 4, **characterized in that**, after step (c), the procedure is as follows:
(d) the pressure in the first and second zones is increased so as to reach, in said first and second regions, a pressure level of the order of 10⁵ Pa and
(e) at least the vacuum means and optionally the electron beam gun are repositioned relative to the section welded at step (c) in order to allow the next weld section to be welded, at least steps (b) and (c) being repeated on a joint section to be welded located downstream of the section welded at step (c).

6. Method according to one of Claims 2 to 5, **characterized in that** welding is stopped when the sum of the lengths (LT₁ to LTₙ) of the welded sections (T₁ to Tₙ) is equal to the total length (L) of the desired welded joint.

7. Method according to one of Claims 2 to 6, **characterized in that** the welded joint has a total length of at least 2 m, preferably at least 5 m, even more preferably at least 10 m, and/or **in that** each welded section (T₁ to Tₙ) has a length (LT₁ to LTₙ) of between 0.01 m and 5 m, preferably between 0.10 m and 4 m, and even more preferably between 1 m and 3 m.

8. Method according to one of Claims 2 to 5, **characterized in that** the workpieces to be welded have a thickness ranging from 1 mm to 300 mm approximately, preferably at least 25 mm, even more preferably at least 75 mm, and/or **in that** the workpieces to be welded are made of steels, stainless steels, light alloys or other metals.

9. Method according to one of Claims 2 to 6, **characterized in that** the workpieces form part of a structure that can be employed in the nuclear, automobile, aerospace or naval fields.

10. Method according to one of Claims 2 to 9, **characterized in that** the low-pressure threshold in said first and second low-pressure zones is below 100 Pa, preferably below 10 Pa and even more preferably between 2 and 10 Pa.

11. Method according to one of Claims 2 to 8, **characterized in that** the electron beam is generated by an electron beam welding machine (1, 2) comprising:
- means (4, 8, 10, 13, 14, 15) for creating at least a partial vacuum, comprising at least a chamber (4) for creating at least a partial vacuum, making it possible to create at least a partial vacuum locally on the front side and back side of the section to be welded; and
- welding means (3) comprising an electron gun for generating at least the electron beam, at least the electron gun (3) being supported by movable support means (5) for moving at least said electron beam gun (3) along at least two different axes (x-x') and (y-y') so as to produce a whole number (n) of successive welded joint sections (T₁ to Tₙ) of lengths (LT₁ to LTₙ).

## Patentansprüche

1. Verfahren zum Elektronenstrahlschweißen unter zumindest partiellem Vakuum, um Metallteile mit einer Struktur großer Abmessung zusammenzufügen, indem zumindest eine Schweißnaht, die eine Gesamtlänge (L) zwischen den Teilen aufweist, nach einer zu schweißende Nahtebene realisiert wird, in der man jeweils eine ganze Zahl (n) sukzessive Schweißnahtabschnitte (T1 bis Tn) mit Längen (LT1 bis LTn) schweißt, wobei n ≥ 2 und die Summe der Längen (LT1 bis LTn) der (n) Schweißnahtabschnitte (T1 bis Tn) approximativ der Gesamtlänge (L) der zu realisierenden Schweißnaht entspricht, wobei jeder Nahtabschnitt (T1 bis Tn) mit einer einzigen Lage geschweißt ist, und dies durch Einsetzen eines Elektronenstrahls, der durch eine Elektronenstrahlkanone geliefert wird und unter einem Druck unter 10⁵ Pa an der Oberseite und an der Unterseite der zu schweißenden Nahtebene, die anhand von Mitteln der zumindest partiellen Vakuumisierung erhalten wird, wobei man nach dem Schweißen eines Abschnitts (T1 bis Tn), die Elektronenstrahlkanone und die Mittel der Vakuumisierung der Teile entfernt und am nächsten zu schweißenden Abschnitt anordnet.

2. Schweißverfahren nach Anspruch 1, in dem
- die zusammenzuschweißenden Teile derart eines im Verhältnis zum anderen angeordnet werden, dass eine zu schweißende Nahtebene definiert wird, und
- jeweils eine ganze Zahl (n) sukzessive Schweißnahtabschnitte (T1 bis Tn) mit Längen (LT1 bis LTn) geschweißt werden, mit Hilfe zumindest einer Elektronenstrahlkanone und Mitteln zur zumindest partiellen Vakuumisierung, die zumindest teilweise eine Vakuumisierungskammer umfassen, wobei n ≥ 2 und die Summe der Längen (LT1 bis LTn) der (n) Schweißnahtabschnitte (T1 bis Tn) approximativ der Gesamtlänge (L) der zu realisierenden Schweißnaht entspricht, wobei jeder Nahtabschnitt (T1 bis Tn) nach zumindest den folgenden sukzessiven Schritten realisiert wird:
a) Anordnen zumindest der Elektronenstrahlkanone und der Vakuumisierungsmittel, die zumindest die Vakuumisierungskammer umfassen, im Verhältnis zu einem Teilabschnitt der zu schweißenden Nahtebene mit dem zu schweißenden Abschnitt (T1 bis Tn),
(b) Erzeugen eines zumindest partiellen Vakuums in einer ersten Druckminderungszone und in einer zweiten Druckminderungszone durch Verringerung des Drucks, der in der ersten und in der zweiten Zone herrscht, bis ein Druckniveau unter 10⁵ Pa erreicht wird, wobei sich die erste Zone an der Oberseite der zu schweißenden Nahtebene befindet und zumindest den zu schweißenden Abschnitt (T1 bis Tn) umfasst, und wobei sich die zweite Zone an der Unterseite der schweißenden Nahtebene befindet und zumindest den zu schweißenden Abschnitt (T1 bis Tn) umfasst,
(c) Zusammenschweißen, mit einer einzigen Lage, der Metallteile, indem zumindest der zu schweißende Abschnitt (T1 bis Tn) einem Elektronenstrahl ausgesetzt wird, der von der Elektronenstrahlkanone geliefert wird, um einen geschweißten Abschnitt zu erhalten.

3. Verfahren nach Anspruch 2, **dadurch gekennzeichnet, dass** zumindest zwei sukzessive Nahtabschnitte (T1 bis Tn) approximativ gleiche Längen (LT1 bis LTn) aufweisen.

4. Verfahren nach Anspruch 2, **dadurch gekennzeichnet, dass** die sukzessiven Nahtabschnitte (T1 bis Tn) verschiedene Längen (LT1 bis LTn) aufweisen.

5. Verfahren nach einem der Ansprüche 2 bis 4, **dadurch gekennzeichnet, dass** nach dem Schritt (c) Folgendes ausgeführt wird:
(d) Erhöhen des Drucks in der ersten und in der zweiten Zone, bis in der ersten und in der zweiten Zone ein Druckniveau von 10⁵ Pa erreicht wird, und
(e) erneutes Anordnen zumindest der Vakuumisierungsmittel und gegebenenfalls der Elektronenstrahlkanone im Verhältnis zum Abschnitt, der im Schritt (c) geschweißt wurde, um es zu erlauben, den nächsten Nahtabschnitt zu schweißen, indem zumindest die Schritte (b) und (c) an einem zu schweißenden Nahtabschnitt, der sich nach dem Abschnitt, der im Schritt (c) geschweißt wurde, befindet, wiederholt werden.

6. Verfahren nach einem der Ansprüche 2 bis 5, **dadurch gekennzeichnet, dass** das Schweißen beendet wird, wenn die Summe der Längen (LT1 bis LTn) der geschweißten Abschnitte (T1 bis Tn) der Gesamtlänge (L) der gewünschten Schweißnaht gleichkommt.

7. Verfahren nach einem der Ansprüche 2 bis 6, **dadurch gekennzeichnet, dass** die Schweißnaht eine Gesamtlänge von zumindest 2 m aufweist, vorzugsweise von zumindest 5 m, und noch bevorzugter von zumindest 10 m, und/oder **dadurch**, dass jeder geschweißte Abschnitt (T1 bis Tn) eine Länge (LT1 bis LTn) zwischen 0,01 m und 5 m aufweist, vorzugsweise zwischen 0,10 m und 4 m, und noch bevorzugter zwischen 1 m und 3 m.

8. Verfahren nach einem der Ansprüche 2 bis 5, **dadurch gekennzeichnet, dass** die zu schweißenden Teile eine Dicke von 1 mm bis etwa 300 mm aufweisen, vorzugsweise von zumindest 25 mm, und noch bevorzugter von zumindest 75 mm und/oder **dadurch**, dass die zu schweißenden Teile aus Stahlen, aus nicht rostenden Stahlen, aus Leichtmetalllegierungen oder aus anderen Metallen realisiert sind.

9. Verfahren nach einem der Ansprüche 2 bis 6, **dadurch gekennzeichnet, dass** die Teile Bestandteil einer Struktur sind, die im Bereich der Atomkraft, der Automobilindustrie, der Luft- und Raumfahrt oder der Schifffahrt eingesetzt werden kann.

10. Verfahren nach einem der Ansprüche 2 bis 9, **dadurch gekennzeichnet, dass** der Druckminderungsschwellwert in der ersten und in der zweiten Druckminderungszone kleiner als 100 Pa ist, bevorzugt kleiner als 10 Pa, und noch bevorzugter zwischen 2 und 10 Pa.

11. Verfahren nach einem der Ansprüche 2 bis 8, **dadurch gekennzeichnet, dass** der Elektronenstrahl anhand einer Maschine (1, 2) zum Elektronenstrahlschweißen erzeugt wird, die Folgendes umfasst:
- die Mittel der zumindest partiellen Vakuumisierung (4, 8, 10, 13, 14, 15) mit zumindest einer Kammer (4) zur zumindest partiellen Vakuumisierung, die es erlaubt, ein lokales zumindest partielles Vakuum an der Oberseite und der Unterseite des zu schweißenden Abschnitts zu erzeugen, und
- Schweißmittel (3) mit einer Elektronenstrahlkanone, die es erlaubt, zumindest den Elektronenstrahl zu erzeugen, zumindest der Elektronenstrahlkanone (3), die von mobilen Tragmitteln (5) getragen wird, die eine Verschiebung zumindest der Elektronenstrahlkanone (3) nach zumindest zwei verschiedenen Achsen (x-x') und (y-y') erlaubt, um eine ganze Zahl (n) sukzessiver Schweißnahtabschnitte (T1 bis Tn) mit Längen (LT1 bis LTn) zu realisieren.
